# EUROPEAN PATENT APPLICATION

(11) **EP 4 174 730 A1**
(43) Date of publication of application: **03.05.2023**
(21) Application number: 22200139.8
(22) Date of filing: 06.10.2022
(51) Int. Cl.: G06N 5/045, G06N 3/045, G06N 3/0895, G06N 5/01, G06N 20/20, G06N 20/10

(54) **METHOD AND SYSTEM FOR GENERATING A CONCEPT LABEL MODEL TO LABEL A DATASET FOR TRAINING A HIERARCHICAL MULTI-TASK MACHINE LEARNING MODEL**

(30) Priority: 01.11.2021 PT 2021117538
(71) Applicant: Feedzai - Consultadoria e Inovação Tecnológica, S.A., 3030-199 Coimbra (PT)
(72) Inventor: DE OLIVEIRA MOREIRA, RICARDO MIGUEL, 3030-199 COIMBRA (PT); BALAYAN, VLADIMIR, 3030-199 COIMBRA (PT); BENTO SOUSA, JOÃO PEDRO, 3030-199 COIMBRA (PT); DOS SANTOS SALEIRO, PEDRO, 3030-199 COIMBRA (PT); SANTOS RODRIGUES BIZARRO, PEDRO GUSTAVO, 3030-199 COIMBRA (PT)
(74) Representative: Patentree

(57) **Abstract**

The present document discloses a method for obtaining a concept label model for training a hierarchical multi-task machine learning model comprising, sequentially connected, a first machine learning model for receiving input records and for predicting concept labels, and a second machine learning model for predicting class labels from predicted concept labels corresponding to respective input records, said hierarchical multi-task machine learning model comprising a concept label feed arranged to feed between the first and second machine learning models, for receiving predicted concept labels from the concept label model, for training said hierarchical multi-task machine learning model. It is further disclosed a non-transitory storage media including program instructions for obtaining a concept label model for training a hierarchical multi-task machine learning model, and a system comprising an electronic data processor arrange to carry out the disclosed method.

## Description

### TECHNICAL FIELD

The present disclosure relates to a method and system for generating a concept label model to label a dataset for training a hierarchical multi-task machine learning model.

### BACKGROUND

The AI black-box paradigm has led to a growing demand for model explanations. Concept-based explainability emerges as a promising family of methods addressing the information needs of humans-in-the-loop without technical knowledge in Machine Learning (ML), namely, for Explainable Al. It concerns the generation of high-level concept-based explanations, e.g., for a "Suspicious payment", rather than low-level explanations based on model features, e.g., "MCC=7801".

Concept-based explainability can be implemented through supervised learning by learning to predict concept labels. This explainability task is often combined with a main classification task using a multi-task learning approach. With this approach, both a classification, or decision, and an explainability task, concept prediction, are learned jointly. However, multi-task learning requires great amounts of training data labelled on both tasks.

In this context, a concept is a semantic representation of the data instance that is relevant for a given classification task. For instance, "cough", "fever" and "loss of smell" could be relevant semantic concepts for the classification task of diagnosing a particular disease. For most computer vision and natural language processing applications, the annotation of concepts can be easily achieved by direct inspection of the data instances which are typically images or words/sentences. For instance, it is straightforward to identify the concept "stripes" on a picture of a zebra.

In tabular data, however, the instances are composed of an arbitrary number of numerical and/or categorical data columns. This makes it hard for a human to create a concise mental representation of a data instance. The task of annotating semantic concepts on a single instance following that mental picture is deemed unfeasible for most non domain experts.

The manual concept labelling can become even more challenging for tabular data with some temporal structure, e.g., in a fraud detection use case. In this setting, some concepts can be associated to patterns identifiable only by observing previous data instances related to the instance to be labelled.

Under these circumstances, human labelling becomes a task only possible to domain experts who are well acquainted with the true data generation process and are aware of the high-level data patterns.

To manually annotate concept labels on large-scale datasets is, therefore, a very expensive task both in terms of human resources and time.

Considering the high costs of manual labelling, an efficient solution is to label a small sample of the large-scale dataset and use only that subset for the supervised task of concept interpretability. This approach, however, is not suited for learning Neural Network algorithms which typically achieve bad performance when learning from very small datasets.

Weak supervision shifts the labelling problem from a manual task of annotating exact labels into a search for less precise, or weak, labels, making it possible to be applied to the large-scale datasets. In essence, weak supervision methods take advantage of domain knowledge combined with contextual information to generate weak labels automatically. When done correctly, weak supervision allows training models with better performance than models training on very small human-labelled datasets. Some of the existing methods are interactive and combine a set of human-defined Labelling Functions (LFs) into a generative model to create weak labels and associated confidences.

Other simpler methods, known as distant supervision methods, directly apply the human defined labelling functions to the unlabelled data to obtain the "weak" labels. In [1] and [2], the authors apply distant supervision to the problem of label scarcity for concepts. This method directly maps a set of binary features (corresponding to rule triggers in the original dataset) to the concept labels. In [2], the authors combine the distant labels with the human annotated labels (provided by domain experts) into a hybrid learning strategy to train a final Neural Network model.

Despite increasing popularity in recent years, training concept-based explainers is still very hard in the tabular data setting due to concept label scarcity. Manually labelling concept explanations on tabular data can be laborious for non-experts, dramatically increasing the cost of training explainers.

These facts are disclosed in order to illustrate the technical problem addressed by the present disclosure.

### GENERAL DESCRIPTION

The present document discloses a method for obtaining a concept label model for training a hierarchical multi-task machine learning model comprising, sequentially connected, a first machine learning model for receiving input records and for predicting concept labels, and a second machine learning model for predicting class labels from predicted concept labels corresponding to respective input records, said hierarchical multi-task machine learning model comprising a concept label feed arranged to feed between the first and second machine learning models, for receiving predicted concept labels from the concept label model, for training said hierarchical multi-task machine learning model; the method comprising the steps of:
split a tabular dataset having records in rows and fields in columns, said fields comprising input record fields and class label fields, into a small dataset and a large dataset, wherein the small dataset has less records than the large dataset and has the same fields as the large dataset;
receive annotations with user-defined concept labels for the records of the small dataset;
split the annotated small dataset into an annotated training set and an annotated test set;
train a plurality of candidate models using the annotated training set for predicting each of the user-defined concept labels;
select, according to a predetermined metric, a candidate model for each of the user-defined concept labels.

In an embodiment, each of the candidate models is trained with randomly selected hyperparameters from a predetermined range, in particular hyperparameters being selected independently of the concept.

In an embodiment, the user-defined concept labels are arranged according to a predetermined concept taxonomy.

In an embodiment, said method comprising receiving one or more labelling criteria, arranged as labelling functions, and applying said labelling criteria to the records of the small dataset for obtaining annotations with user-defined concept labels for the records of the small dataset.

In an embodiment, the received annotations further comprise concept-specific counts of the user-defined concept labels, wherein the concept-specific counts have been obtained by applying said labelling criteria, for each record of the small dataset, as concept-specific features for training the candidate models.

In an embodiment, said method further comprising, if there are records of the small dataset without annotations of user-defined concept labels, labelling those unannotated records with a label corresponding to a lack of concept label.

In an embodiment, the second machine learning model is a weighted decision layer.

In an embodiment, ranking training features used for training the plurality of candidate models for each of the user-defined concept labels by averaging feature importance across the selected candidate models.

In an embodiment, said method further comprising:
obtaining a pairwise correlation matrix between each pair of user-defined concept labels in respect of occurrences for a same record of the annotated small dataset;
for each of the user-defined concept labels, from the obtained pairwise correlation matrix, selecting a predetermined number of the most and least correlated user-defined concept labels;
for each user-defined concept label, selecting a predetermined numberofthe best ranked training features for the each user-defined concept label, for the most correlated user-defined concept labels, and for the least correlated user-defined concept labels;
training a plurality of candidate models using the selected best ranked training features and using the annotated training set for predicting each of the user-defined concept labels;
selecting, according to a predetermined metric, a predetermined number (N) of candidate models for each of the user-defined concept labels, for obtaining a first diversity layer;
training a model for each of the user-defined concept labels, using said diversity layer and the annotated training set, for predicting each of the user-defined concept labels, for obtaining a second generalization layer.

In an embodiment, the training of the second generalization layer comprises feeding outputs of the first diversity layer to the second generalization layer.

In an embodiment, the pairwise correlation is obtained by linear correlation, or by rank-based correlation, preferably Pearson correlation or Spearman correlation.

In an embodiment, said method comprising thresholding the numerical prediction of each of the user-defined concept labels for generating a binary label for each of the user-defined concept labels.

In an embodiment, said method comprising determining an independent threshold for each of the user-defined concept labels to attain a predetermined False Positive Rate, FPR, or a predetermined True Positive Rate, TPR.

It is also disclosed a non-transitory storage media including program instructions for obtaining a concept label model for training a hierarchical multi-task machine learning model, the program instructions including instructions executable to carry out the disclosed method.

It is further disclosed a system for obtaining a concept label model for training a hierarchical multi-task machine learning model, the system comprising an electronic data processor arrange to carry out the disclosed method.

It is presented a concept-based weak supervision framework for tabular data. It combines domain expertise, application data, and ML techniques to train a group of ML models, dubbed Concept Teachers, that learn how to automatically label concept explanations.

Additionally, a two-stage training procedure is presented for improved generalization ability. It implements a Dependencies-Aware Concept Teacher Stacking (DACTS) in which the different concept and data dependencies are taken into account during the Concept Teachers training process.

Herein the annotation types used throughout the learning process are referred as decision (or class) labels, and concept (or explainability) labels.

### BRIEF DESCRIPTION OF THE DRAWINGS

The following figures provide preferred embodiments for illustrating the disclosure and should not be seen as limiting the scope of invention.
**Figure** 1: Schematic representation of an embodiment of the disclosed framework applied to the concept-based explainability method.
**Figure 2****:** Schematic representation of an embodiment of the weak supervision for Base Concept Teachers.
**Figure** 3: Schematic representation of an embodiment of the weak supervision for two-stage Concept Teachers, i.e., with a Dependencies-Aware Concept Teacher Stacking.
**Figure 4****:** Flowchart representation of an embodiment of the method for generating a labelled dataset.

### DETAILED DESCRIPTION

The present document discloses a method for obtaining a concept label model for training a hierarchical multi-task machine learning model.

It is further disclosed a concept-based weak supervision method and system, herewith named ConceptWeaSuL, combining domain knowledge, such as taxonomies, with any existing data primitives, e.g., business rules, features, and labels of the main classification task, to train ML models for each concept label, herewith named Concept Teachers. These models are later used to label large datasets for training concept-based explainers, e.g., via multi-task learning. Thus, solving the problem of automatic labelling of semantic concepts on tabular data for concept-based interpretability.

It is presented, as a use case example, an implementation of such framework on a Fraud Detection. It is assumed that a fraud detection system computes complex profiling features, temporal aggregations, for a given entity of interest, such as a credit card and its transactional history, and other relevant engineered features feeding a ML model for fraud prediction. Moreover, it is assumed that a fraud detection system also comprises a rules engine that triggers relevant business rules, such as, testing if the limit of credit card money spent for a given time period is exceeded.

In a typical application of the disclosure, the disclosed components are optimized to distinguish transactions of a certain type on a wide stream of (mostly of another type) transactions. This system is preferably further integrated with a downstream case management User Interface (Ul) for real-time review of some selected subset of transactions. This task is performed by a team of domain experts, e.g., analysts, who can detect transactions of the type of interest by direct observation of the transaction information.

The first step of the disclosure comprises in asking domain experts to define a taxonomy of semantic concepts (Concept Taxonomy) representing the complete set of logic predicates required by a human decision-makerforthe execution of a classification task. For instance, a fraud analyst investigates if there are any fraud or legitimate patterns, associated with at least one user-defined concept, when reviewing a transaction or a case.

The second step of the disclosure comprises in asking the domain experts, e.g., fraud analysts, to annotate data instances, e.g., transactions or cases, with concepts from the Concept Taxonomy to create a small manually-labelled concept dataset. Finally, with the help of the domain experts, a set of labelling functions is trained that maps any data primitives, such as data features or business rules, to the set of concept labels. These will be further transformed into concept-specific features in a subsequent machine learning pipeline.

In the example of a fraud detection embodiment, the disclosure uses multiple signals present in the unlabelled large-scale dataset: the already existing context for each of the transactions including transaction data and fraud features; the fraud label of the transaction; the fraud rules' triggers; the concept-specific features obtained from the labelling functions.

A small dataset of concept labelled transactions is used in ML models to learn how to label concepts as supervised machine learning task. The trained ML models, herein named Concept Teachers, can then be used to generate weak concept labels on large-scale datasets. Although imprecise, these weak concept labels prove valuable assets in training concept-based explainers, e.g., through multi-task learning.

In an embodiment, the weak supervision disclosed method and system can be part of a concept-based explainability system. In a fraud detection example, the system shows the concept explanations in the case management UI along with the transaction information. From that point, a feedback loop which validates or corrects the concept explanations provided is created.

In an embodiment, the feedback is used as an expansion of the expert labelled dataset allowing for the concept teachers to be retrained to incorporate the new feedback. The weak supervision framework can be understood as an ever-growing source of concept knowledge for the main classification task, e.g., fraud detection.

In an embodiment, depending on the labelling quality obtained, the concept teachers are used as data explainers, independently from the decision task. This would have multiple applications ranging from data understanding to fraud pattern monitoring.

The disclosure includes thus a weak supervision method and system for concept labelling on tabular data to train concept-based explainers.

Concept-based interpretability methods for tabular data require large datasets to be annotated with relevant semantic concepts. In the case of fraud detection, these concepts may represent fraud patterns or risky behaviours such as high velocity of transactions or malformations in customer inserted information, e.g., shipping addresses. To overcome the high cost of manually annotating tabular data with relevant concepts, it is disclosed a weak supervision method and system tailored for automatic concept labelling in tabular data.

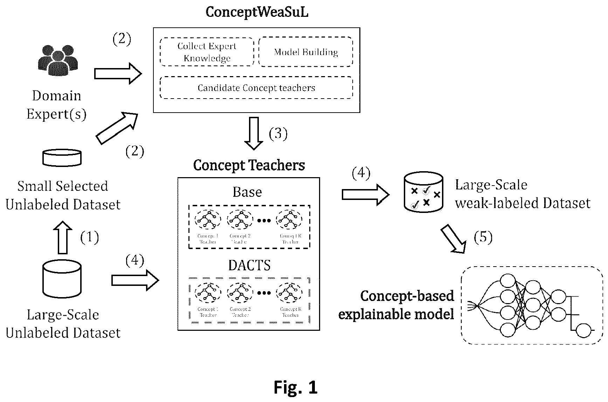

**Figure 1** shows a schematic representation of an embodiment of the disclosed framework applied to the concept-based explainability method, where (1) the small set of instances is selected from a large-scale unlabelled dataset; (2) the framework requires the existence of at least one Domain Expert; additionally, it receives the small subset of selected instances; (3) the disclosure creates 2 different types of Concept Teachers, differing in complexity: Base Concept Teachers and Dependencies-Aware Concept Teacher Stacking (DACTS); (4) both types of Concept Teachers can be used to generate concept labels on a large-scale unlabelled dataset; (5) this large-scale dataset can then be used for training a Concept-based explainable model.

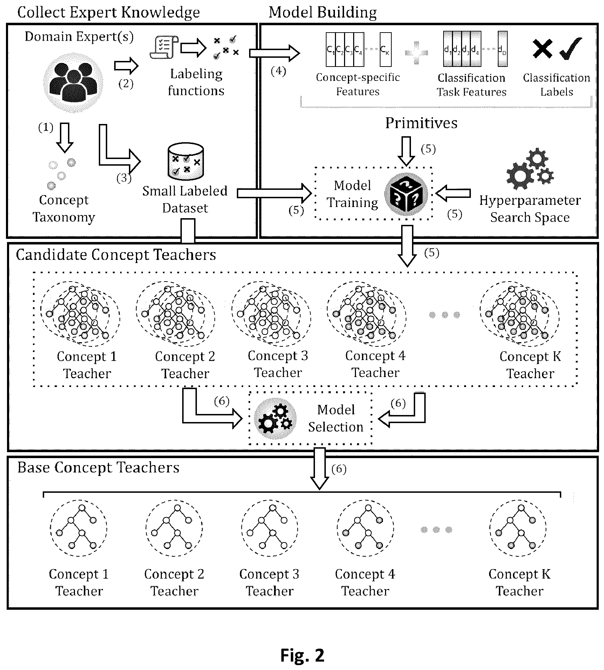

**Figure 2** shows a schematic representation of an embodiment of the weak supervision for Base Concept Teachers, outputting a set of Base Concept Teachers. First, the Domain Expert(s): (1) define a concept taxonomy; (2) create a set of labelling functions (which use the available primitives in the data to generate concept labels); (3) annotate a small dataset with concept labels. Model Building: (4) the labelling functions are converted into concept-specific features; (5) the small dataset is split into training set and test set and multiple Candidate Teachers, for each concept, are trained using Random Search on the Hyperparameter Space and combinations of Primitives; (6) the Base Concept Teachers are selected to be the best performing on the test set.

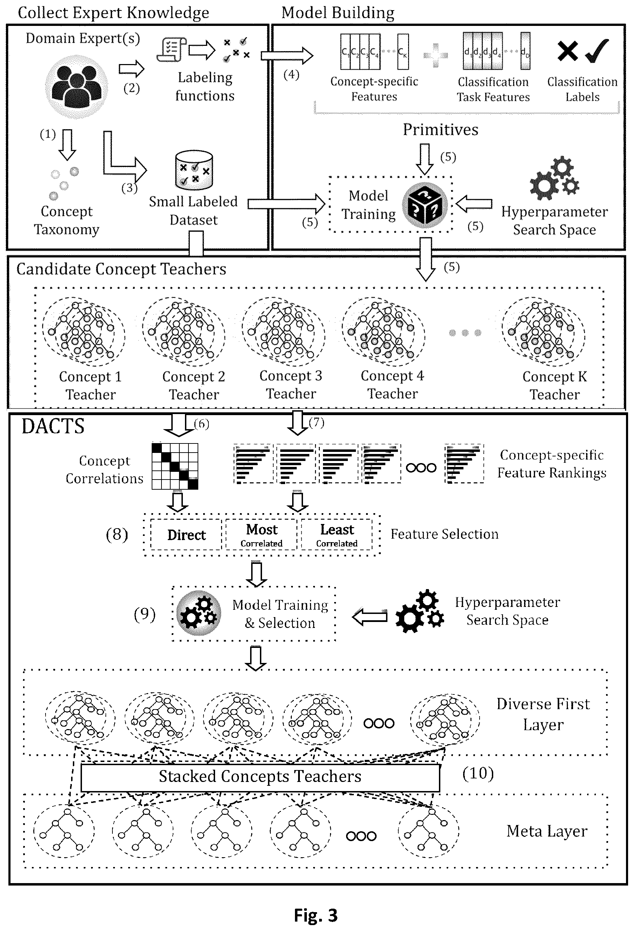

**Figure 3** shows a schematic representation of an embodiment of the weak supervision for two-stage Concept Teachers, i.e., with a Dependencies-Aware Concept Teacher Stacking, outputting Stacked Concept Teachers. Steps 1-5 are the same as for Base Concept Teachers; (6) concept label correlations are obtained from the labelled dataset; (7) concept-specific feature importance rankings are obtained from the Candidate Concept Teachers; (8) 3 different sets of features selections are obtained for each concept; (9) a diverse group of concept teachers is trained on multiple combinations of parameters and feature selection sets, a selection of the best performing and least correlated (in terms of predictions) is done to form the Diverse First Layer; (10) finally, a Meta Layer of teachers is trained on the meta training set, which is scored by the First Layer. To exploit concept dependencies, the predictions for all concepts are inputted as predictors for each concept.

The disclosure leverages domain expert's knowledge and machine learning capabilities to train concept-specific labellers, dubbed Concept Teachers. These labellers are later used to label concepts on large tabular datasets to serve as training data for concept-based explanation models.

In this document, a valid Domain Expert is:
Human Classifier: Must be capable of performing the main classification task by direct inspection of the instances in the dataset. The expert's performance should be at least the same as a ML classifier;
Domain Knowledge: Must have a clear mental model of most of the human-understandable concepts associated with the different classification classes. These mental representations must reflect expert's reasoning during the decision process; Concept Recognition: Should be capable of identifying the presence of one or more of those human-understandable concepts in specific instances of the dataset.

The present disclosure preferably requires the existence of at least one of such Domain Experts.

The disclosed method or system starts with the domain expert or experts defining a Concept Taxonomy which consists of listing the known concepts and corresponding human interpretable definitions.

The defined concepts encode the most common high-level patterns used in the domain experts' thought process when manually classifying the data instances. Additionally, the Concept Taxonomy must associate each of the concepts defined with a classification label. For instance, in the fraud use case, some concepts are associated with fraudulent behaviour, and others with the legitimate behaviour.

The domain experts preferably create a set of straightforward labelling functions which, based on expert's reasoning, create a mapping from any of the data primitives, e.g., features, labels or other information associated with the data instances, to the human understandable concepts. These labelling functions are then used to produce some concept-specific features.

The domain experts manually label a small dataset of selected instances. The selection is optionally performed using predictions of a ML classifier previously trained on the main classification task. The instances can for example be selected through one Active Learning criteria or randomly sampled. In a binary detection example, the instances can be selected closer to the detection decision boundary defined by a target False Positive Rate (FPR), or any other target metric. The target budget for the number selected instances can be defined according to what is deemed feasible by analysts (i.e. domain experts) to label with the available time.

In a preferred embodiment, the case management UI, the same environment being used by analysts to perform their analysis, can be used for the collection of concept labels.

After the expert labelling is performed, optionally a set of Unidentified/Other concepts are added to the Concept Taxonomy for each of the decision classes, and assign these new concept labels to the instances with no concepts associated. This covers for the possible lack of completeness, previously defined for concept-based interpretability [3], of the initially defined Concept Taxonomy.

The following steps transform the collected expert knowledge into a set of Machine Learning models which are referred to as Concept Teachers.

To train the concept teachers, only information that will be available on the large-scale unlabelled dataset herein referred to as primitives, is used, complemented by the domain expert labelling and output class labelling. In a fraud detection example, these primitives may include: fraud features, a fraud label, rules triggered by a fraud detection system and the labelling functions, defined by the domain experts, and that can be converted into concept-specific features.

In an embodiment, concept-specific Features are generated from counting the number of labelling functions that positively label the corresponding concept in a given instance. More advanced approaches can also be considered where some feature engineering is performed targeting specific concepts on the concept taxonomy. In the fraud detection example, a group of fraud analysts and/or data scientists' engineering features that would be more salient for transactions with a presence of a specific concept.

Classification Task Features, these features are the available information used and/or produced by the main classification task system. In a fraud detection example, the fraud features, which consider the past temporal behaviour of some of the transaction entities, and fraud rules are triggered during the system's decision process. It is assumed that the historical data already went through a decision system.

Finally, the inclusion of the classification label is included as a primitive for the concept teachers. This is so since all of the concepts should be positively or negatively associated with the decision classes. It was experimentally found that the usage of the decision label positively impacts the performance of the concept teachers.

To train the concept teachers the hyperparameters are tuned for the best performing set of concept teachers from a grid of hyperparameter combinations and ML algorithms. The model hyperparameters are selected randomly and the labelling performance is evaluated on the test set. The best hyperparameter combination is selected independently for each of the concepts, meaning that two concepts can have teachers with different ML algorithms and parameters.

To create the concept teachers, the human annotated dataset is used and split it into train and test for assessing labelling performance. The task of the concept teachers is to predict the presence of concepts in a given dataset instance. This labelling task is a multi-label prediction since the presence of concepts is not mutually exclusive.

Two approaches are disclosed for tackling the multi-label problem: Base Concept Teachers and Dependencies-Aware Concept Teacher Stacking (DACTS).

The first, the Base Concept Teachers is a simpler approach and consists of training the concept teachers by Binary Relevance (BR) where an individual teacher is trained per each of the K concepts. Hyperparameter optimization for each of the BR teachers was performed. The final set of teachers is selected to be the best performing, concept-wise, on the expert annotated test set. This performance is measured as area under the ROC curve because it is a threshold-free metric that captures the teacher performance. However, other performance metrics could be used.

Base Concept teachers may not exploit all the valuable information about possible correlation between concepts labels. Therefore, a Dependencies-Aware Concept Teacher Stacking (DACTS), which takes concept dependencies into consideration, may be added to the framework.

DACTS is a stacking method composed of two layers. In the first layer it is obtained a set of concept teachers that is, at the same time, the most diverse in terms of inductive biases and the best performing on the hold out set which are used to train the meta layer. With the meta layer, it is found (1) the best generalization over the diversity of the first layer and (2) exploited the concept dependencies by fitting each concept teacher using the predictions for all the other concepts from the first layer.

The pairwise correlations between all concepts in the concept taxonomy are computed using the dataset of labels obtained from the domain experts. The correlation methods used can be linear (Pearson Correlation), rank-based (Spearman correlation), or other more advanced nonlinear correlation methods. The resulting pairwise correlation matrix is used to generate the feature selection sets.

In an embodiment, before generating the feature selection sets, it is computed the concept-specific feature importance from the Candidate Concept Teachers.

Because these concept teachers can differ even in the ML algorithms used, the resulting feature rankings can vary within the top performing candidate teachers. To get a stable estimate of the feature importance rankings, an average of the relative importance across the best performing candidate teachers for each concept is computed. This provides a set of K different rankings of the complete list of features, including also the features originated from the labelling functions and the main decision task label. The valuable information obtained in this step is that the most important features for predicting concept k should appear first in the k-th ranking of features.

The diversity of the first layer is an important aspect of the stacking ensemble. To obtain a diverse set of input sources the K rankings of features are used to generate 3 diverse sets of feature selections. Using the concept correlation matrix, the m most and the m least associated concepts are found for each of the K concepts, wherein m is an adjustable parameter. Then, 3 groups of feature selections are created:
Directly Associated Features: features for each of the concepts using directly their corresponding feature importance ranking;
Features Most Correlated Concepts: features from the rankings of the m concepts most correlated with the concept to be predicted;
Features Least Correlated Concepts: The features are selected using the rankings of the m concepts least correlated with the concept to be predicted.

The selections are performed by setting a cut-off percentage of the cumulative importance in the relative feature importance ranking. More exactly, for a cut-off percentage of x%, the topmost important features in the ranking until the cumulative percentage of relative importance reaches x% is selected. x is another adjustable parameter in the framework. For the second and the third groups of feature selections, a cut-off selection on m rankings is performed and merges the m resulting sets into a final set through a union operation. This feature selection is performed for each of the concepts, resulting into 3 feature sets for each concept.

In another embodiment, the cut-off parameter x is varied and produce 3 x v feature sets for each concept, where v is the number of cut-off points used.

The next step before training the diverse first layer is to split the human labelled training set in half. The two resulting sets are used to train the first and the meta layers, respectively. The splitting percentage can be varied to values different from 50%, however it is recommended the first set to take the larger percentage.

For the first layer of the stacking, first the N teachers are trained for each of the K concepts. Within the N models not only the hyperparameters and algorithms, as for the Simple Concept teachers, must vary, but also the feature sets obtained in the previous step. The random sample of hyperparameters and algorithms must be equally balanced between feature sets, meaning that all the different feature sets must have the same number of algorithm and parameter combinations. All the N × K models obtained are used to score the large-scale unlabelled dataset. Next, a teacher selection is performed by optimizing the following factors: (1) maximize the teacher performances on the second training set, used to train the meta layer; (2) minimize the teacher prediction correlations on the concept unlabelled set. The prediction correlations can be obtained from linear correlation or more advanced correlation methods. For each concept, subsets of n teachers from the N teachers trained are selected. The selected teachers compose the first stacking layer. Finally, this layer's teachers are used to score the meta training set obtaining n scores for each of the K concept labels.

To build the meta stacking layer, K teachers (one per concept) are trained on the meta training set. Preferably, a key aspect of this stacking is that each teacher in the meta layer must use the same list of predictions from the first layer. Meaning that the meta teacher for concept 1 receives the first layer predictions not only for concept 1 but also for concepts 2 to K. This allows for the meta teachers to both consider the correlations between concepts and, at the same time, generalize over the diversity of the different inductive biases and input sources from the first layer.

In another embodiment, the original inputs used for the first layer are added to the inputs of the meta layer.

After training teachers with any of the two approaches, i.e., simple and DACTS, the concept labels it is needed to obtain from the prediction scores obtained. To do so, two thresholding methods are disclosed which generate binary labels from the numerical score values.

By equalizing prevalences it is aimed to generate concept labels with the same prevalences as the ones of the whole human labelled dataset. In detail, first those prevalences in the human labelled set are computed and then threshold the score predictions on the whole large-scale unlabelled dataset to match those prevalences.

By target metric it is aimed at controlling the labelling error estimated from the test set of the human labelled set. In detail, the concept prediction thresholds are computed using some target metric. For instance, False Positive Rate (FPR) can be used to control the amount of false positive labels generated or True Positive Rate (TPR) to assert that at least a given percentage of labels is generated correctly. The set of K thresholds obtained is then applied to the prediction scores on the large-scale unlabelled set to obtain the final concept labels.

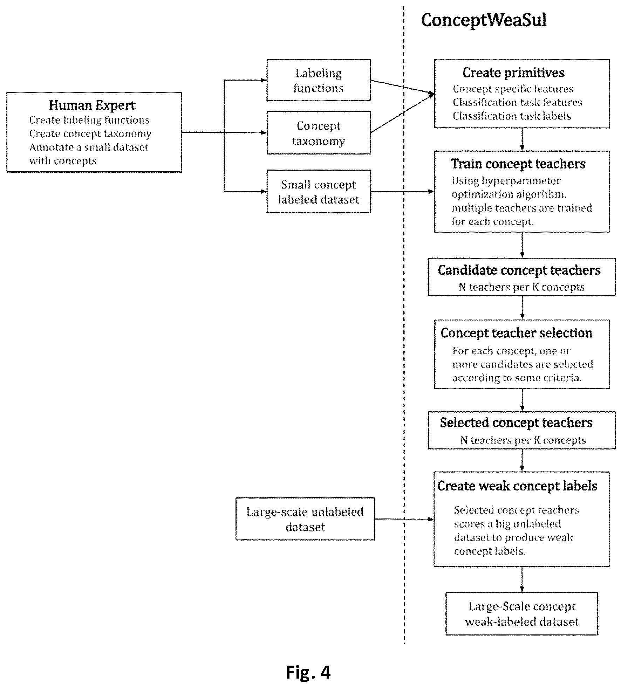

**Figure 4** shows a flowchart representation of an embodiment of the method for generating a labelled dataset.

### Example

For a better understanding of how to implement the disclosed method it is further described an experimental setup for the example use case of fraud detection, giving more concrete examples of implementation details. The parameters and configurations detailed are suggestions of what could be used in practice on the framework.

For the experiments a privately held real-world e-commerce fraud detection dataset was used. This dataset consists of more than 5M transactions with associated fraud labels obtained from ground truth evidence, such as charge-backs and direct contact from/to card holders.

The concept taxonomy was created by a group of professional fraud analysts with deep knowledge of the fraud patterns most prevalent in this e-commerce fraud scenario. Some of the concepts are associated with fraudulent behaviour, and others with the legitimate behaviour. In this setting, concept labels can co-occur and in the case of multiple concepts, they can also have conflicting concepts with regards to their fraud/legitimate association.

Next, the expert concept annotations were collected on a dataset of approximately 3K instances. These instances were selected from the large-scale historical dataset following the criteria of closeness to the decision boundary of a previously built fraud detection ML model. This decision boundary was defined by setting a target FPR of 5% on a separate validation set. On this small set, the same group of professional fraud analysts conducted their everyday analysis trying to correctly predict the fraud label of the historical transactions. At the end of the analysis, and after the fraud prediction was provided, analysts were asked to identify if any concepts from the defined taxonomy were present.

In the fraud datasets, there are the original data features (developed for a real-time fraud detection ML model) and the set of triggered rules that aid in that real-time fraud detection system.

The domain experts were further asked to define a set of simple concept labelling functions using those rule triggers. This resulted in a set of more than 300 simple labelling functions. These were then converted into concept-specific features by counting the number of rules that mapped to each of the concepts in a given transaction.

**Table 1 - Simple labelling function example**

| **Triggered rule** | **Mapped concepts** |
|---|---|
| Order contains risky product styles. | Suspicious Items |
| User tried n different cards last week. | Suspicious Customer, Suspicious Payment |

Both the human labelled dataset and the large-scale concept-unlabelled dataset were split into train and test. The two datasets contain transactions in overlapping time periods and the splits were performed in same time instants so that the human-labelled sets have the same temporal span as the concept-unlabelled sets.

As input for the concept teachers, input combinations from the four sources: fraud detection features (profiles and other), rule triggers, concept-specific features obtained from the labelling functions, and the fraud label were used.

A set of concept teachers using the simple procedure was created. Both Feed Forward Neural Networks and Random Forest algorithms were considered for the hyperparameter optimization. An optimization using random search on both algorithms was performed. For random forests, the number of trees was varied between [100; 1000], the minimum instances to split between [2; 20] and the minimum leaf instances between [1; 19]. For the neural-networks the number of hidden layers between was varied between [4; 9], the layer sizes between [32; 1024], the learning rate between [0:0001; 0:005] and the dropout probabilities for all the hidden layers between [0:1; 0:5]. The search was performed in the following way: (1) a set of parameters is sampled; (2) teachers for all K concepts are trained using the sampled set of parameters; (3) the K teachers are evaluated using the same test set. 250 models on both random forests and feed-forward neural networks were trained. The teachers with the best test performances for each of the K concepts were selected.

For the stacking ensemble, 5 sets of feature selections for each of the 3 groups were created using the cut-off percentages of {50%; 75%; 90%; 95%; 99%} totalling 15 sets of features for each concept.

Finally, concept teachers using Random Forests, Feed Forward Neural Networks, Support Vector Machines, Logistic Regressions, and LightGBM models were trained on the 15 sets of features obtained during selection. Additionally, a short hyperparameter optimization on each of these 75 configurations with 50 runs each was performed. The best performing models on each of the 75 configurations were selected. The selected models moved forward to the final optimized selection which minimizes prediction correlations on the unlabelled set and maximizes performance on the meta layer training set.

With the first layer complete, it is followed by a meta layer where a Random Forest model was trained on the meta training set using the predictions of the first layer teachers. The parameters used were the ones of the best Random Forest models obtained by the simple approach.

Finally, the obtained stacked concept teachers were used to generate the concept labels on the largescale concept unlabelled dataset of 5M transactions. To obtain binary labels from the scores, an equalizing prevalence method was applied. Finally, an additional concept ("Other Fraud") was introduced to label the fraudulent transactions which did not have any concept label identified by the teachers.

The present disclosure distances itself from the state of the art, namely, Distant Supervision approaches, since these apply directly the human defined labelling functions to the unlabelled dataset, while the present disclosure is based on learning how to label concepts as a supervised task using the labelling functions and other available primitives as input.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

### References

[1] Vladimir Balayan, Pedro Saleiro, Catarina Belém, Ludwig Krippahl, and Pedro Bizarro. Teaching the machine to explain itself using domain knowledge. arXiv preprint arXiv:2012.01932, 2020.
[2] Catarina Belém, Vladimir Balayan, Pedro Saleiro, and Pedro Bizarro. Weakly supervised multi-task learning for concept-based explainability. arXiv preprint arXiv:2104.12459, 2021.
[3] Chih-Kuan Yeh, Been Kim, Sercan O Arik, Chun-Liang Li, Tomas Pfister, and Pradeep Ravikumar. On completeness-aware concept-based explanations in deep neural networks. arXiv preprint arXiv:1910.07969, 2019.

## Claims

1. Method for obtaining a concept label model for training a hierarchical multi-task machine learning model comprising, sequentially connected, a first machine learning model for receiving input records and for predicting concept labels, and a second machine learning model for predicting class labels from predicted concept labels corresponding to respective input records,
said hierarchical multi-task machine learning model comprising a concept label feed arranged to feed between the first and second machine learning models, for receiving predicted concept labels from the concept label model, for training said hierarchical multi-task machine learning model;
the method comprising the steps of:
split a tabular dataset having records in rows and fields in columns, said fields comprising input record fields and class label fields, into a small dataset and a large dataset, wherein the small dataset has less records than the large dataset and has the same fields as the large dataset;
receive annotations with user-defined concept labels for the records of the small dataset;
split the annotated small dataset into an annotated training set and an annotated test set;
train a plurality of candidate models using the annotated training set for predicting each of the user-defined concept labels;
select, according to a predetermined metric, a candidate model for each of the user-defined concept labels.

2. Method according to the previous claim wherein each of the candidate models is trained with randomly selected hyperparameters from a predetermined range, in particular hyperparameters being selected independently of the concept.

3. Method according to any of the previous claims wherein the user-defined concept labels are arranged according to a predetermined concept taxonomy.

4. Method according to any of the previous claims, comprising receiving one or more labelling criteria, arranged as labelling functions, and applying said labelling criteria to the records of the small dataset for obtaining annotations with user-defined concept labels for the records of the small dataset.

5. Method according to the previous claim wherein the received annotations further comprise concept-specific counts of the user-defined concept labels, wherein the concept-specific counts have been obtained by applying said labelling criteria, for each record of the small dataset, as concept-specific features for training the candidate models.

6. Method according to any of the previous claims, further comprising, if there are records of the small dataset without annotations of user-defined concept labels, labelling those unannotated records with a label corresponding to a lack of concept label.

7. Method according to any of the previous claims wherein the second machine learning model is a weighted decision layer.

8. Method according to any of the previous claims ranking training features used for training the plurality of candidate models for each of the user-defined concept labels by averaging feature importance across the selected candidate models.

9. Method according to any of the previous claims further comprising:
obtaining a pairwise correlation matrix between each pair of user-defined concept labels in respect of occurrences for a same record of the annotated small dataset;
for each of the user-defined concept labels, from the obtained pairwise correlation matrix, selecting a predetermined number of the most and least correlated user-defined concept labels;
for each user-defined concept label, selecting a predetermined number of the best ranked training features for the each user-defined concept label, for the most correlated user-defined concept labels, and for the least correlated user-defined concept labels;
training a plurality of candidate models using the selected best ranked training features and using the annotated training set for predicting each of the user-defined concept labels;
selecting, according to a predetermined metric, a predetermined number (N) of candidate models for each of the user-defined concept labels, for obtaining a first diversity layer;
training a model for each of the user-defined concept labels, using said diversity layer and the annotated training set, for predicting each of the user-defined concept labels, for obtaining a second generalization layer.

10. Method according to the previous claim wherein the training of the second generalization layer comprises feeding outputs of the first diversity layer to the second generalization layer.

11. Method according to any of the claims 9-10 wherein the pairwise correlation is obtained by linear correlation, or by rank-based correlation, preferably Pearson correlation or Spearman correlation.

12. Method according to any of the previous claims comprising thresholding the numerical prediction of each of the user-defined concept labels for generating a binary label for each of the user-defined concept labels.

13. Method according to the previous claim comprising determining an independent threshold for each of the user-defined concept labels to attain a predetermined False Positive Rate, FPR, or a predetermined True Positive Rate, TPR.

14. Non-transitory storage media including program instructions for obtaining a concept label model for training a hierarchical multi-task machine learning model, the program instructions including instructions executable to carry out the method of any of the claims 1-13.

15. System for obtaining a concept label model for training a hierarchical multi-task machine learning model, the system comprising an electronic data processor arranged to carry out the method of any of the claims 1-13.
